# EUROPÄISCHE PATENTSCHRIFT

(11) **EP 3 317 127 B1**
(45) Veröffentlichungstag und Bekanntmachung des Hinweises auf die Patenterteilung: **19.06.2019**
(21) Anmeldenummer: 16706886.5
(22) Anmeldetag: 01.03.2016
(51) Int. Cl.: B60C 19/00

(54) **FAHRZEUGLUFTREIFEN MIT SCHALLABSORBER**
VEHICLE TIRE WITH NOISER REDUCTION MEANS
PNEUMATIQUE DE VÉHICULE COMPORTANT UN RÉDUCTEUR DE BRUIT

(30) Priorität: 03.07.2015 DE 102015212484
(43) Veröffentlichungstag der Anmeldung: 09.05.2018
(73) Patentinhaber: Continental Reifen Deutschland GmbH, 30165 Hannover (DE)
(72) Erfinder: JACOB, Matthias, 04107 Leipzig (DE); SCHÜRMANN, Oliver, 30855 Langenhagen (DE)
(74) Vertreter: Finger, Karsten
(86) Internationale Anmeldenummer: PCT/EP2016/054261
(87) Internationale Veröffentlichungsnummer: WO 2017/005379

(56) Entgegenhaltungen:
- EP-A1- 1 214 205
- EP-A1- 2 006 125
- WO-A1-2011/051203
- WO-A1-2013/182477

## Beschreibung

Die Erfindung betrifft einen Fahrzeugluftreifen mit einem in seinem Inneren an der dem Laufstreifen gegenüberliegenden Innenfläche haftend angebrachten Schallabsorber aus Schaumstoff, wobei der Schallabsorber an einem vorab aufgebrachten, selbsttätig abdichtenden Dichtmittel haftet, welches zumindest unmittelbar nach seinem Aufbringen eine zum Anhaften des Schallabsorbers erforderliche Klebrigkeit aufweist.

Ein derartiger Fahrzeugluftreifen ist aus der DE 10 2007 028932 A1 (Oberbegriff des Anspruchs 1) bekannt. Der Innenabsorber ist ein Ring aus offenzelligem Schaumstoff, welcher die Luftschwingung im Reifen reduziert und zu einer Verbesserung des Geräuschverhaltens im Fahrzeug führt. Das an der Reifeninnenseite aufgebrachte hochviskose Dichtmittel hat zwei Funktionen: Es dichtet einen unerwünschten Durchstich des Reifens im Bereich des Laufstreifens ab, indem das viskose Dichtmittel im Falle einer Verletzung der Innenschicht in die Stelle der Verletzung fließt. Zudem dient das Dichtmittel gleichzeitig als "Haftmittel" zum Befestigen des schallabsorbierenden Schaumstoffringes.

Jedoch kann das Fließverhalten des hochviskosen Dichtmittels durch den auf dem Dichtmittel vollflächig aufliegenden Innenabsorber nachteilig beeinflusst sein, so dass die erwünschte Dichtwirkung erst verspätet oder gar nicht eintritt. In Fällen, in denen der eindringende Fremdkörper aus dem Reifen wieder austritt und einen großen Luftkanal hinterlässt, ist eine zuverlässige Abdichtung durch das in seinem Fließverhalten nachteilig beeinflusste Dichtmittel besonders schwierig.

Unter "hochviskos" ist hier ein Dichtmittel, dessen Viskosität mehr als 10 Pa·s beträgt, zu verstehen.

Der Erfindung liegt die Aufgabe zu Grunde, die Abdichtung des Reifens bei Durchstichen und gleichzeitig die Schallabsorption zu verbessern. Ferner ist es die Aufgabe der Erfindung, ein Verfahren zur Herstellung eines vorgenannten Reifens bereitzustellen.

Gelöst wird die gestellte Aufgabe in Bezug auf den Fahrzeugluftreifen erfindungsgemäß dadurch, dass der Schallabsorber aus einer Vielzahl an einzelnen, untereinander nicht verbundenen geometrischen Schallabsorberkörpern besteht, dass jeder der geometrischen Schallabsorberkörper am Dichtmittel haftet und dass jeder der geometrischen Schallabsorberkörper einen Durchmesser von 1 mm bis 50 mm aufweist.

Erfindungsgemäß ist der Schallabsorber kein über den Reifenumfang umlaufender einstückiger Körper, sondern der Schallabsorber besteht aus einer Vielzahl an einzelnen Schallabsorberkörpern, die jeweils auf dem ringkreisförmig an der Reifeninnenfläche angeordneten Dichtmittel anhaften. Die Schallabsorberkörper sind einlagig vor- und hinter- und nebeneinander, sich berührend und/oder berührungsfrei, auf dem ringkreisförmig angeordneten Dichtmittel anhaftend angeordnet.

Die Oberfläche der Vielzahl an Schallabsorberkörpern ist in Summe üblicherweise wesentlich größer als die Oberfläche eines einzigen schallabsorbierenden Ringes, wodurch die Schallabsorption verbessert ist. Dadurch, dass die Schallabsorberkörper bei geeigneter Geometrie nicht vollflächig mit dem Dichtmittel verklebt sind, sondern im Idealfall zwischen den Schallabsorperkörpern freie Dichtmitteloberflächenbereiche gebildet sind, ist das Fließverhalten des Dichtmittels bei Durchstichen und somit die Abdichtung des Reifens verbessert.

Der Durchmesser eines Schallabsorberkörpers bemisst sich anhand der kleinstmöglichen, diesen Schallabsorberkörper umhüllenden (gedachten) Kugel.

Es werden so viele Schallabsorberkörper geeigneter Größe angeordnet, dass - in Projektion auf die Schallabsorberkörper - die dem Laufstreifen gegenüberliegende Fläche zu 30 - 95%, bevorzugt zu 70 - 90%, mit Schallabsorberkörpern bedeckt ist.

Vorteilhaft ist es, wenn die Schallabsorberkörper geometrisch regelmäßige Körper wie Kugeln oder Polyeder sind, welche bevorzugt einen Durchmesser von 10 mm bis 70 mm, bevorzugt von 20 m bis 40 mm, aufweisen. Kugeln beispielsweise haben lediglich eine punktförmige Auflagefläche auf dem Dichtmittel, so dass die Auflagefläche sämtlicher, den Schallabsorber bildenden kugelförmigen Schallabsorberkörper ideal klein ist. Es steht eine große vom Schallabsorber unbedeckte Dichtmitteloberfläche zur Verfügung. Daher ist die Fließfähigkeit des Dichtmittels im Vergleich zu einem vollflächig aufliegenden Schaumstoffring stark verbessert.

In einer anderen Ausführung der Erfindung sind die Schallabsorberkörper geometrisch unregelmäßige Körper, welche bevorzugt einen Durchmesser von 10 mm bis 70 mm, bevorzugt von 20 m bis 40 mm, aufweisen. Die Schallabsorberkörper weisen eine größere Klebfläche auf als beispielsweise ein kugelförmiger Schallabsorberkörper, wodurch durch Wahl des geeigneten Durchmessers eine perfekte Einstellung der Balance zwischen Dichtfähigkeit des Dichtmittels und der Anhaftung des Schallabsorberkörpers ermöglicht ist.

Im Rahmen der Erfindung kommen sämtliche Dichtmittel in Frage, die selbsttätig abdichten und zumindest unmittelbar nach dem Aufbringen auf die innere Oberfläche des Reifens soweit klebrig sind, dass der nachträglich aufgebrachte Schallabsorber haftend mit dem Dichtmittel verbunden werden kann. Es eignen sich daher beispielsweise Dichtmittel auf Basis von Polyurethan oder Dichtmittel, welche eines viskose Mischung auf Basis eines Butylkautschukes, eines Polybutens oder auf Basis von Silikon sind.

Vorteilhaft ist es, wenn die Schichtdicke des Dichtmittels zwischen 2 mm und 5 mm, vorzugsweise etwa 3,5 mm beträgt. Durch das verbesserte Fließverhalten des Dichtmittels ist es bei zuverlässiger Abdichtung bei Durchstichen ermöglicht, die Schichtdicke des Dichtmittels um 30% - 50% gegenüber der Schichtdicke des vollflächig aufliegenden Schaumstoffringes zu verringern. Hierdurch ist an Kosten sowie am Reifengewicht gespart.

Die Schallabsorberkörper innerhalb eines Reifens weisen entweder gleiche Größen oder verschiedene Größen auf, um beispielsweise eine möglichst große projezierte Flächendeckung zu erreichen.

Das Verfahren zum Herstellung eine Fahrzeugluftreifens mit Dichtmittel und Schallabsorber gemäß einem vorbeschriebenen Fahrzeugreifen ist mit den folgenden Schritten einfach und kosteneffizient durchzuführen:
- Anordnen der ringkreisförmigen Dichtmittelschicht auf die Innenschicht des Reifens
- Schüttung einer ausreichenden Anzahl an Schallabsorberkörpern in den Reifeninnenraum
- Rotation des Reifens, so dass die Schallabsorberkörper auf der ringkreisförmige Dichtmittelschicht anhaften.

Weitere Merkmale, Vorteile und Einzelheiten der Erfindung werden nun anhand der Zeichnungen, die neben einem Ausführungsbeispiel des Standes der Technik ein schematisches erfindungsgemäßes Ausführungsbeispiele darstellen, näher beschrieben. Dabei zeigen die:
Fig. 1 einen Querschnitt durch einen Fahrzeugluftreifen des Standes der Technik;
Fig. 2 einen Querschnitt durch einen erfindungsgemäßen Fahrzeugluftreifen.

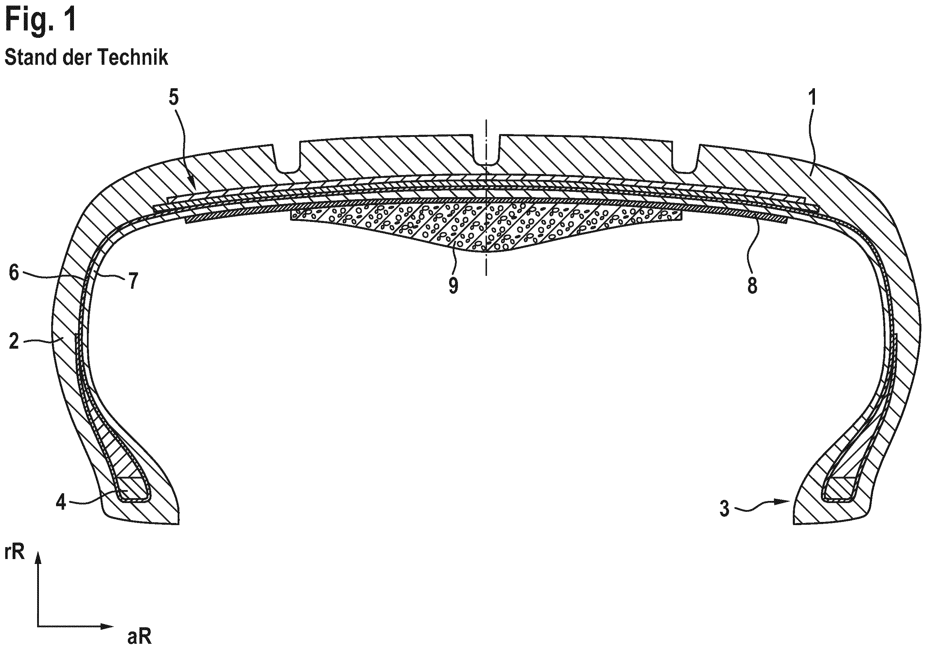

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist ein Dichtmittel 8 aufgebracht, welches in der Lage ist, sich bei Durchstich - Beschädigung des Reifens - selbstabdichtend zu verhalten. Am Dichtmittel 8 haftet vollflächig ein einstückiger, ringkreisförmiger Innenabsorber 9 in Funktion eines Schallabsorbers, welcher unmittelbar nach dem Aufbringen des Dichtmittels 8, solange dieses noch ausreichend klebrig ist, auf das Dichtmittel 8 aufgepresst wird, wie nachfolgend beschrieben wird. Der Innenabsorber 9 ist bezüglich seiner schallabsorbierenden Eigenschaften auf die Reifenhohlraumfrequenz abgestimmt. Der Innenabsorber 9 weist beispielsweise hier einen etwa langgestreckt dreieckförmigen, bezüglich der Symmetrieachse des Reifens symmetrischen Querschnitt auf, welcher mit seiner Grundseite vollflächig auf dem Dichtmittel 8 haftet. Der Schaumstoff des Innenabsorber 9 ist ein offenzelliger Schaumstoff, da dieser am besten dazu geeignet ist, Schall zu absorbieren. Als Dichtmittel kommen beispielsweise Polyurethan-Gele oder viskose Mischungen auf Basis von Butylkautschuken, Polybutenen oder Silikon in Frage, wobei die Mischungen die üblichen weiteren Bestandteile, wie Weichmacheröle, enthalten können. Das Dichtmittel wird, beispielsweise durch Aufsprühen, derart eingebracht, dass es zumindest die dem Laufstreifen 1 gegenüberliegende innere Oberfläche bedeckt. Zur optimalen Verteilung des Dichtmittels an der Innenfläche kann der Reifen in Rotation versetzt werden. Das Dichtmittel wird ferner in einer solchen Menge eingebracht, dass die Schichtdicke des Dichtmittels zwischen 7 mm und 8 mm beträgt. Zumindest unmittelbar nach dem Aufbringen soll das Dichtmittel relativ flüssig und klebrig sein. Zu diesem Zeitpunkt wird der vorgefertigte Innenabsorber 9 in das Innere des Reifens eingebracht. Nach dem Ausreagieren haftet der Innenabsorber 9 an dem elastisch deformierbaren, aber weitestgehend ortsfest verbleibenden Dichtmittel 8.

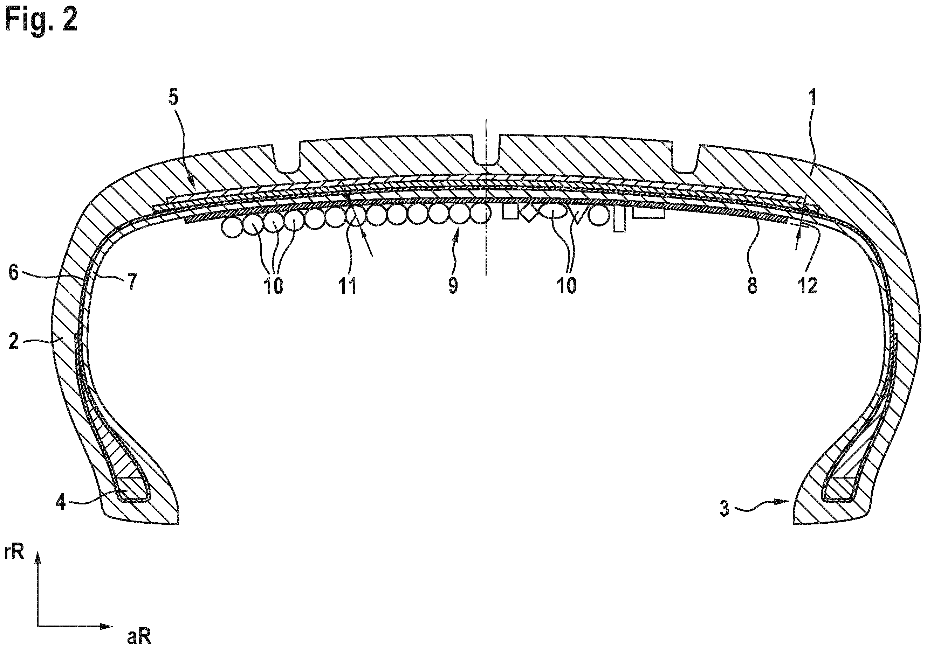

Die Fig. 2 zeigt einen Querschnitt durch einen erfindungsgemäßen Fahrzeugluftreifen für PKW der Dimension 205/55 R16. Der Fahrzeugreifen der Fig. 2 unterscheidet sich darin von dem Fahrzeugreifen der Fig. 1, dass der Schallabsorber 9 aus einer Vielzahl an einzelnen, untereinander nicht verbundenen, sich berührenden und/oder berührungsfreien geometrischen Schallabsorberkörpern 10 zusammengesetzt ist. Es sind derart viele Schallabsorberkörper 10 angeordnet, dass - in Projektion auf die Schallabsorberkörper - die dem Laufstreifen gegenüberliegende Fläche zu 30 - 95%, bevorzugt zu 70 - 90%, mit Schallabsorberkörpern 10 bedeckt ist. Dabei zeigt die linke Querschnittshälfte Schallabsorberkörper 10 in Kugelform. Jeder der geometrischen Schallabsorberkörper 10 haftet am Dichtmittel 8. Jeder der geometrischen Schallabsorberkörper 10 ist gleich groß und weist einen Durchmesser 11 von 10 mm bis 70 mm auf. Die Schichtdicke 12 des Dichtmittels 8 ist sehr gering und beträgt etwa 3,5 mm. Auf der rechten Zeichnungshälfte sind beispielhaft verschiedene mögliche Geometrien der Schallabsorberkörper 10 gezeigt, wobei vorzugsweise der Schallabsorber 9 aus Schallabsorberkörpern 10 gleicher Geometrie besteht.

### Bezugszeichenliste

- 1 .........: Laufstreifen
- 2 .........: Seitenwand
- 3 .........: Wulstbereich
- 4 .........: Wulstkern
- 5 .........: Gürtelverband
- 6 .........: Karkasseinlage
- 7 .........: Innenschicht
- 8 .........: Dichtmittellage
- 9 .........: Innenabsorber / Schallabsorber
- 10 .......: Schallabsorberkörper
- 11 .......: Durchmesser des Schallabsorberkörpers
- 12 .......: Schichtdicke des Dichtmittels

## Patentansprüche

1. Fahrzeugluftreifen mit einem in seinem Inneren an der dem Laufstreifen (1) gegenüberliegenden Innenfläche haftend angebrachten Schallabsorber (9) aus Schaumstoff, wobei der Schallabsorber (9) an einem vorab aufgebrachten, selbsttätig abdichtenden Dichtmittel (8) haftet, welches zumindest unmittelbar nach seinem Aufbringen eine zum Anhaften des Schallabsorbers (9) erforderliche Klebrigkeit aufweist, **dadurch gekennzeichnet, dass** der Schallabsorber (9) aus einer Vielzahl an einzelnen, untereinander nicht verbundenen geometrischen Schallabsorberkörpern (10) zusammengesetzt ist, dass jeder der geometrischen Schallabsorberkörper (10) am Dichtmittel (8) haftet und dass jeder der geometrischen Schallabsorberkörper (10) einen Durchmesser (11) von 1 mm bis 50 mm aufweist.

2. Fahrzeugluftreifen nach Anspruch 1, **dadurch gekennzeichnet, dass** die Schallabsorberkörper (10) geometrisch regelmäßige Körper wie Kugeln oder Polyeder sind, welche bevorzugt einen Durchmesser (11) von 10 mm bis 70 mm, bevorzugt von 20 m bis 40 mm, aufweisen.

3. Fahrzeugluftreifen nach Anspruch 1, **dadurch gekennzeichnet, dass** die Schallabsorberkörper (10) geometrisch unregelmäßige Körper sind, welche bevorzugt einen Durchmesser (11) von 10 mm bis 70 mm, bevorzugt von 20 m bis 40 mm, aufweisen.

4. Fahrzeugluftreifen nach einem oder mehreren der vorangehenden Ansprüche, **dadurch gekennzeichnet, dass** das Dichtmittel (8) ein Polyurethan-Gel ist.

5. Fahrzeugluftreifen nach einem oder mehreren der Ansprüche 1 bis 3, **dadurch gekennzeichnet, dass** das Dichtmittel (8) eine viskose Mischung auf Basis eines Butylkautschukes, eines Polybutens oder auf Basis von Silikon ist.

6. Fahrzeugluftreifen nach einem oder mehreren der vorangehenden Ansprüche, **dadurch gekennzeichnet, dass** die Schichtdicke (12) des Dichtmittels (8) zwischen 2 mm und 5 mm, vorzugsweise etwa 3,5 mm beträgt.

7. Fahrzeugluftreifen nach einem oder mehreren der vorangehenden Ansprüche, **dadurch gekennzeichnet, dass** die Schallabsorberkörper (10) innerhalb eines Reifens entweder gleiche Größen oder verschiedene Größen aufweisen.

8. Fahrzeugluftreifen nach einem oder mehreren der vorangehenden Ansprüche, **dadurch gekennzeichnet, dass** derart viele Schallabsorberkörper (10) angeordnet, dass - in Projektion auf die Schallabsorberkörper (10) - die dem Laufstreifen gegenüberliegende Fläche zu 30 - 95%, bevorzugt zu 70 - 90%, mit Schallabsorberkörpern 10 bedeckt ist.

9. Verfahren zum Herstellung eine Fahrzeugluftreifens mit Dichtmittel und Schallabsorber gemäß einem oder mehrerer der Ansprüche 1 bis 8 mit den folgenden Schritten:
- Anordnen der ringkreisförmigen Dichtmittelschicht auf die Innenschicht des Reifens
- Schüttung einer ausreichenden Anzahl an geometrischen Schallabsorberkörpern in den Reifeninnenraum
- Rotation des Reifens, so dass die geometrischen Schallabsorberkörper auf der ringkreisförmige Dichtmittelschicht anhaften.

## Claims

1. Pneumatic vehicle tire having a sound absorber (9) composed of foam which is adhesively attached, in the interior of said tire, to the inner surface situated opposite the tread (1), wherein the sound absorber (9) adheres to a previously applied, self-sealing sealant (8) which, at least immediately after its application, has a tackiness required for the adhesive attachment of the sound absorber (9), **characterized in that** the sound absorber (9) is made up of a multiplicity of individual geometric sound absorber bodies (10) which are not connected to one another, **in that** each of the geometric sound absorber bodies (10) adheres to the sealant (8), and **in that** each of the geometric sound absorber bodies (10) has a diameter (11) of 1 mm to 50 mm.

2. Pneumatic vehicle tire according to Claim 1, **characterized in that** the sound absorber bodies (10) are geometrically regular bodies, such as spheres or polyhedra, which preferably have a diameter (11) of 10 mm to 70 mm, preferably of 20 m to 40 mm.

3. Pneumatic vehicle tire according to Claim 1, **characterized in that** the sound absorber bodies (10) are geometrically irregular bodies which preferably have a diameter (11) of 10 mm to 70 mm, preferably of 20 m to 40 mm.

4. Pneumatic vehicle tire according to one or more of the preceding claims, **characterized in that** the sealant (8) is a polyurethane gel.

5. Pneumatic vehicle tire according to one or more of Claims 1 to 3, **characterized in that** the sealant (8) is a viscous mixture based on a butyl rubber, a polybutene or based on silicone.

6. Pneumatic vehicle tire according to one or more of the preceding claims, **characterized in that** the layer thickness (12) of the sealant (8) is between 2 mm and 5 mm, preferably approximately 3.5 mm.

7. Pneumatic vehicle tire according to one or more of the preceding claims, **characterized in that** the sound absorber bodies (10) within a tire are either of equal sizes or of different sizes.

8. Pneumatic vehicle tire according to one or more of the preceding claims, **characterized in that** sound absorber bodies (10) are arranged in such a number that, in a projection onto the sound absorber bodies (10), 30 - 95%, preferably 70 - 90%, of the surface situated opposite the tread is covered with sound absorber bodies (10).

9. Method for producing a pneumatic vehicle tire with sealant and sound absorber according to one or more of Claims 1 to 8, having the following steps:
- arranging the annular sealant layer on the inner layer of the tire,
- pouring a sufficient number of geometric sound absorber bodies into the tire interior space,
- rotating the tire such that the geometric sound absorber bodies adhere to the annular sealant layer.

## Revendications

1. Pneumatique de véhicule qui comporte un réducteur de bruit (9) en mousse amené en adhérence dans son intérieur au niveau de la surface intérieure placée à l'opposé de la bande roulement (1), le réducteur de bruit (9) adhérant au niveau d'un moyen d'étanchéification (8) précédemment appliqué et réalisant automatiquement une étanchéité, ledit moyen présentant un caractère collant au moins directement après son application, ce caractère collant étant nécessaire pour l'adhésion du réducteur de bruit (9), **caractérisé en ce que** le réducteur de bruit (9) se compose d'une pluralité de corps de réducteur de bruit (10) individuels géométriques non reliés les uns aux autres, que chacun desdits corps de réducteur de bruit géométriques adhère au moyen d'étanchéification (8) et que chacun des corps de réducteur de bruit (10) géométrique présente un diamètre (11) de 1 mm à 50 mm.

2. Pneumatique de véhicule selon la revendication 1, **caractérisé en ce que** les corps de réducteur de bruit (10) sont des corps géométriquement réguliers tels que des sphères ou des polyèdres présentant de façon préférée un diamètre (11) de 10 mm à 70 mm, de façon préférée de 20 m à 40 mm.

3. Pneumatique de véhicule selon la revendication 1, **caractérisé en ce que** les corps de réducteur de bruit (10) sont des corps géométriquement irréguliers présentant de façon préférée un diamètre (11) de 10 mm à 70 mm, de façon préférée de 20 m à 40 mm.

4. Pneumatique de véhicule selon l'une quelconque des revendications précédentes ou plusieurs d'entre elles, **caractérisé en ce que** le moyen d'étanchéification (8) est un gel de polyuréthane.

5. Pneumatique de véhicule selon l'une quelconque des revendications 1 à 3 ou plusieurs d'entre elles, **caractérisé en ce que** le moyen d'étanchéification (8) est un mélange visqueux à base d'un caoutchouc de butyle, d'un polybutène ou à base de silicone.

6. Pneumatique de véhicule selon l'une quelconque des revendications précédentes ou plusieurs d'entre elles, **caractérisé en ce que** l'épaisseur de couche (12) du moyen d'étanchéification (8) est comprise entre 2 mm et 5 mm et est de préférence d'approximativement 3,5 mm.

7. Pneumatique de véhicule selon l'une quelconque des revendications précédentes ou plusieurs d'entre elles, **caractérisé en ce que** les corps de réducteur de bruit (10) présentent à l'intérieur d'un pneumatique soit les mêmes dimensions soit des dimensions différentes.

8. Pneumatique de véhicule selon l'une quelconque des revendications précédentes ou plusieurs d'entre elles, **caractérisé en ce que** de nombreux corps de réducteur de bruit (10) sont disposés de telle sorte que - en projection sur les corps de réducteur de bruit (10) - la surface opposée à la bande roulement soit recouverte à 30 - 95 %, de façon préférée à 70 - 90 %, par les corps de réducteur de bruit 10.

9. Procédé de fabrication d'un pneumatique de véhicule qui comporte des moyens d'étanchéification et des réducteurs de bruit selon l'une quelconque des revendications 1 à 8 ou plusieurs d'entre elles, avec les étapes suivantes :
- agencement des moyens d'étanchéification en forme d'anneau de cercle sur la couche intérieure du pneumatique ;
- distribution d'un nombre suffisant de corps de réducteur de bruit géométriques dans l'espace intérieur du pneumatique ;
- rotation du pneumatique, de sorte que les corps de réducteur de bruit géométriques adhèrent sur la couche de moyens d'étanchéification en forme d'anneau de cercle.
